(19) Europäisches Patentamt
European Patent Office
Office européen des brevets

(11) EP 4 589 170 A1

(12) EUROPEAN PATENT APPLICATION
published in accordance with Art. 153(4) EPC

(43) Date of publication:
23.07.2025 Bulletin 2025/30

(21) Application number: 23865348.9

(22) Date of filing: 04.09.2023

(51) International Patent Classification (IPC):
*F16H 25/22* (2006.01)

(52) Cooperative Patent Classification (CPC):
F16H 25/2223; F16H 25/22

(86) International application number:
PCT/JP2023/032294

(87) International publication number:
WO 2024/057993 (21.03.2024 Gazette 2024/12)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 16.09.2022 JP 2022148014

(71) Applicant: NSK LTD.
Tokyo 141-8560 (JP)

(72) Inventor: OKA Keitaro
Fujisawa-shi, Kanagawa 251-8501 (JP)

(74) Representative: Grünecker Patent- und
Rechtsanwälte
PartG mbB
Leopoldstraße 4
80802 München (DE)

(54) **BALL SCREW**

(57) A ball screw includes a screw shaft formed with an outer peripheral thread groove, a nut formed with an inner peripheral thread groove, a plurality of balls accommodated in a rolling path defined by the outer peripheral thread groove and the inner peripheral thread groove facing each other, and a return tube configured to return the balls from one end to the other end of the rolling path. The return tube includes a tongue that protrudes toward the rolling path and scoops up the balls from the rolling path. The tongue has a shape that gradually narrows from a root to a tip of the tongue.

FIG. 3

**Description**

TECHNICAL FIELD

The present invention relates to a ball screw.

BACKGROUND ART

A ball screw is a device including a nut formed with a female thread groove on an inner peripheral surface, a screw shaft formed with a male thread groove on an outer peripheral surface, balls disposed between a raceway defined by the female thread groove of the nut and the male thread groove of the screw shaft, and a ball return path for returning the balls from an end point to a start point of the raceway, in which the nut moves relative to the screw shaft when the balls roll in the raceway. As the ball return path of the ball screw, a return tube system may be adopted due to advantages such as easy assembly.

Patent Literature 1 discloses an example of a return tube type ball screw. In this ball screw, a return tube that is a circulation component includes, at a top portion thereof, an end surface along a base line perpendicular to a tube axis and a tongue protruding from the base line, and the tongue protrudes into a raceway and functions to scoop up a ball from the raceway into the return tube.

CITATION LIST

PATENT LITERATURE

Patent Literature 1: JP2007-285379A

SUMMARY OF INVENTION

TECHNICAL PROBLEM

A demand for a higher speed ball screw is constantly being made by the market to shorten a cycle time of a machine using the ball screw, and it is necessary to increase an allowable rotational speed of a screw shaft to implement a higher speed ball screw. However, when the allowable rotational speed of the screw shaft is increased, balls roll at high speed along a raceway.

In the ball screw of Patent Literature 1, a ball rolling at high speed collides with the tongue when being scooped from the raceway. At this time, a large stress is applied to a root of the tongue, and a load is repeatedly applied to the tongue since circulating balls sequentially abut against the tongue.

The allowable rotational speed of the screw shaft is generally determined by a fatigue strength of a circulating component due to ball collision. The fatigue strength is generally determined by a magnitude of repeated stress and the number of load repetitions. Therefore, how to reduce the stress generated in the tongue is a problem for a higher speed ball screw.

Regarding such a problem, a ball screw has been developed that is devised to reduce an impact of a ball applied to a tongue by scooping up the ball with the tongue directed in a tangential direction of a thread groove to cope with higher speed. However, it is difficult to make a thick tongue completely coincide with the tangential direction, and the impact of the ball applied to the tongue increases as the used rotational speed increases. Thus, it is desired to further reduce a stress on the tongue.

The present invention is made in view of such a problem, and an object of the present invention is to provide a ball screw that can cope with higher speed and improve durability.

SOLUTION TO PROBLEM

A ball screw according to the present invention includes:

a screw shaft formed with an outer peripheral thread groove;
a nut formed with an inner peripheral thread groove;
a plurality of balls accommodated in a rolling path defined by the outer peripheral thread groove and the inner peripheral thread groove facing each other; and
a return tube configured to return the balls from one end to the other end of the rolling path, in which
the return tube includes a tongue that protrudes toward the rolling path and scoops up the balls from the rolling path, and
the tongue has a shape that gradually narrows from a root to a tip of the tongue.

ADVANTAGEOUS EFFECTS OF INVENTION

According to the present invention, it is possible to provide a ball screw that can cope with higher speed and improve durability.

BRIEF DESCRIPTION OF DRAWINGS

FIG. 1 is a perspective view illustrating a configuration of a ball screw according to a first embodiment.

FIG. 2 is a cross-sectional view along an axial direction, illustrating a portion of the ball screw according to the first embodiment.

FIG. 3 is a cross-sectional view illustrating only a portion taken along a line A-A in FIG. 2.

FIGS. 4A and 4B show an end portion of a return tube viewed from different directions.

FIG. 5 is a graph in which a vertical axis represents a rigidity ratio of a tongue tip (a ratio of a tongue length to a ball diameter is 60% as a standard), and a horizontal axis represents the ratio of the tongue length to the ball diameter.

FIGS. 6A and 6B are similar to FIGS. 4A and 4B, illustrating an end portion of a return tube according to a modification.

FIGS. 7A to 7C illustrate an end portion of a return tube of a ball screw according to a second embodiment.

FIG. 8 is a cross-sectional view similar to FIG. 3, illustrating a ball screw including a return tube according to a first modification.

FIG. 9 is a cross-sectional view similar to FIG. 8, illustrating a ball screw according to a second modification.

DESCRIPTION OF EMBODIMENTS

Hereinafter, embodiments of a ball screw according to the present invention will be described with reference to the drawings.

First Embodiment

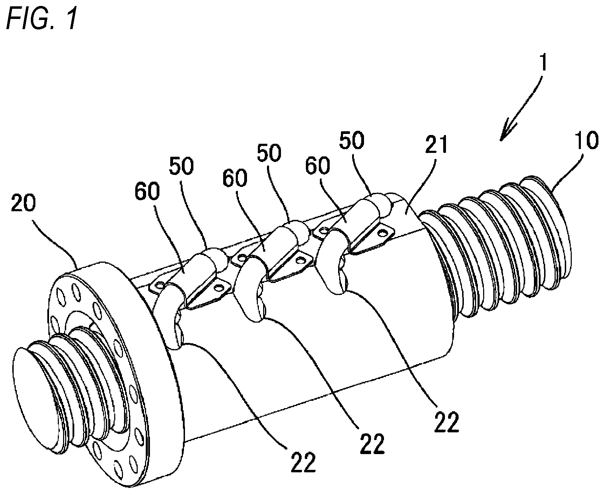

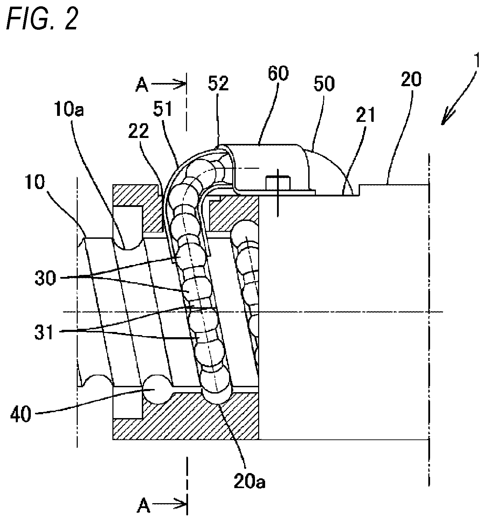

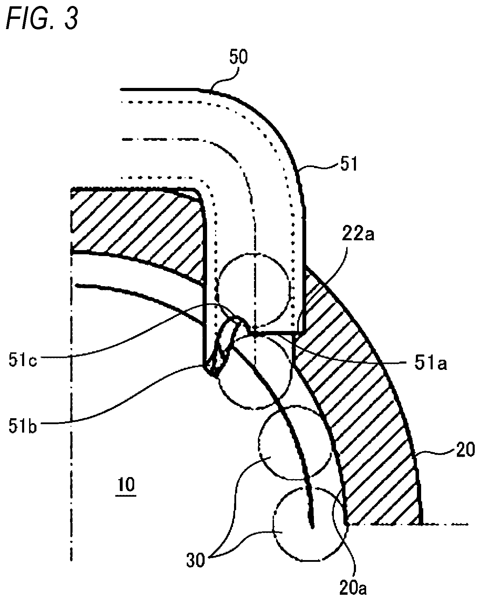

FIG. 1 is a perspective view illustrating a configuration of a ball screw according to a first embodiment. FIG. 2 is a cross-sectional view along an axial direction, illustrating a portion of the ball screw according to the first embodiment. FIG. 3 is a cross-sectional view taken along a line A-A in FIG. 2, illustrating only a part corresponding to a first quadrant with separators omitted when the cross-sectional view viewed in a direction of an arrow A is regarded as a two-dimensional coordinate system.

As illustrated in FIGS. 1 and 2, a ball screw 1 according to the present embodiment includes a screw shaft 10 having a thread groove (outer peripheral thread groove) 10a continuous in a spiral shape on an outer peripheral surface, and a tubular nut 20 having a thread groove (inner peripheral thread groove) 20a continuous in a spiral shape on an inner peripheral surface.

The screw shaft 10 is inserted into the nut 20 along the axial direction, the thread groove 10a of the screw shaft 10 face the thread groove 20a of the nut 20, and a spiral rolling path 40 is defined in a space between the thread grooves 10a and 20a. The rolling path 40 is rollably filled with a plurality of balls (rolling elements) 30, and the nut 20 is joined to the screw shaft 10 via the balls 30 in a relatively rotatable manner. In the present embodiment, a separator 31 is disposed between adjacent balls 30 to prevent contact between the balls 30, and the separator may also be omitted. A separator is described in, for example, JP2002-206617A.

The nut 20 has a portion on an outer surface thereof machined flat, and three return tubes 50 each bent in a substantially U shape are fixed on a flat surface 21 parallel to the axial direction. The return tube 50 is formed with a return path therein for returning the balls 30 from one end to the other end of the rolling path 40. The nut 20 is provided with, for each return tube 50, two through holes 22 that are open in the flat surface 21 and communicate with the thread groove 20a of the nut 20. The return tube 50 has end portions 51 inserted into the two through holes 22 from the flat surface 21 side. The end portions 51 are inclined along a lead angle of the thread groove 10a as illustrated in FIG. 2. The return tube 50 has a central portion 52 disposed on the flat surface 21 and fixed by a fastener 60. In the present embodiment, three return tubes 50 are attached to one nut 20. Alternatively, two or less return tubes or four or more return tubes may be attached.

The return tube 50 is made of metal and has a structure in which the central portion 52 and the end portions 51 connected to both ends of the central portion 52 are integrated from a time of manufacturing. Alternatively, the central portion 52 and the end portions 51 may be manufactured separately and then joined to form the return tube 50.

In FIG. 3, the return tube 50 includes, at the end portion 51, a tongue 51b formed in a partial phase in a circumferential direction and protruding into the rolling path, and a pair of arc-shaped portions 51c formed at a root of the tongue 51b. On a side facing the tongue 51b in the present embodiment, a substantially semicircular end edge 51a is formed between the pair of arc-shaped portions 51c, and the end edge 51a is orthogonal to a center line of the end portion 51. The arc-shaped portion 51c and the substantially semicircular end edge 51a intersect to form a corner portion. Alternatively, an intersection portion between the arc-shaped portion 51c and the semicircular end edge 51a may be formed in a smooth arc shape. The tongue 51b has an inner surface (surface facing the end edge 51a) curved with the same radius of curvature as an inner periphery of the return tube 50, and has a shape that becomes thinner toward a tip A contour line from the arc-shaped portion 51c to the tip of the tongue 51b draws a smooth curve.

The end portion 51 is disposed in the through hole 22 such that an outer peripheral surface of the end portion 51 is fitted to an inner peripheral surface of the through hole 22 over an entire periphery and the end edge 51a abuts against a step portion 22a formed in the through hole 22. Accordingly, the return tube 50 can be positioned relative to the nut 20.

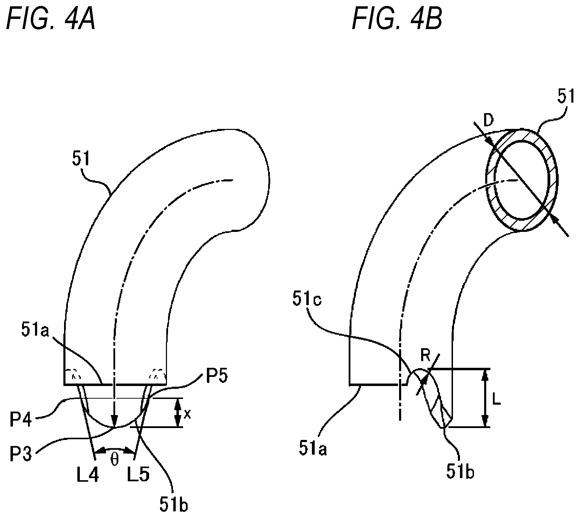

FIG. 4A illustrates the end portion 51 cut from the central portion 52 as viewed along a normal direction of a freely selected point on a center line of the tongue 51b, and FIG. 4B illustrates the end portion 51 as viewed from a direction different from that in FIG. 4A.

The tongue 51b preferably has a length L not less than 70% of an outer diameter of the ball 30. As illustrated in FIG. 4A, the tongue 51b has a shape that gradually narrows from the root toward a tip P3, that is, two side surfaces sandwiching the center line of the tongue 51b have no parallel portions. The tongue 51b preferably has, at a distance of 1/2 from the tip P3 of the tongue 51b, a width in a range of 1/2 to 2/3 of an outer diameter D of the return tube 50. The arc-shaped portion 51c preferably has, at an inner edge, a radius of curvature R that is 1/10 to 3/10 of the outer diameter D of the return tube 50. At least the tongue 51b preferably has a hardness of HRC30 or more.

Referring to FIG. 3, the ball 30 moves in the rolling path 40, rotates around the screw shaft 10 a plurality of times, reaches an end point (intersection of the return tube 50 and the rolling path 40) of the rolling path 40, and is scooped into the return tube 50 from one end portion (opening) of the return tube 50 via the tongue 51b.

More specifically, the ball 30 rolling along the thread groove 10a of the screw shaft 10 is scooped by the tongue 51b in a position of the through hole 22. The ball 30 that has passed through the return tube 50 is returned into the rolling path by the tongue 51b on an opposite side.

Here, when the ball screw 1 is used at high speed, a large amount of energy is generated when the ball 30 rolling at high speed collides with the tongue 51b. When the tongue 51b has an excessively high rigidity, a large local stress is received by the tongue 51b, and a crack or the like may occur at the root of the tongue 51b due to stress concentration. Further, since the ball 30 intermittently collides with the tongue 51b, a so-called load repetition is applied to the tongue 51b, which may cause fatigue failure (for example, peeling) of the tongue 51b.

Therefore, in the present embodiment, the tongue 51b has a shape that gradually narrows from the root toward the tip P3, so that the rigidity of the tongue 51b is controlled and reduced, that is, the tongue 51b is flexible to alleviate the stress. Further, the tongue 51b has an increasing strength toward the root, and thus stress concentration at the root during collision of the ball 30 can be alleviated.

To avoid stress concentration, it is desirable to gradually increase a second moment of area from the tip P3 toward the root (arc-shaped portion 51c) of the tongue 51b, that is, it is desirable not to have a portion where the second moment of area rapidly increases or portions where the second moment of area is equal (portions where the thickness and the width of the tongue are equal). For this purpose, the tongue 51b has a shape spreading in a fan shape from the tip so as not to have a portion where two side surfaces are parallel.

In FIG. 4A, when an angle defined by tangent lines L4 and L5 of two freely selected points P4 and P5 on a virtual plane passing through the tip P3 of the tongue 51b and the points P4 and P5 on two side surfaces equidistant from the tip P3 is defined as an opening angle θ, the opening angle θ gradually decreases as a distance x from the tip P3 along the center line of the tongue 51b to the two points P4 and P5 increases. However, the opening angle θ is desirable to gradually increase from an inflection point as a starting point in a range of a distance of (2L/3) to L from the tip P3 along the center line of the tongue 51b.

Here, a relationship between an impact force of the ball 30 and the rigidity of the tongue 51b will be considered. When the tongue 51b is modeled as a cantilever flexible in a direction away from the center line of the return tube 50 and a spring constant thereof is K and an amount of deflection of the tip of the tongue 51b with which the ball 30 collides is σ, energy U accumulated in the cantilever can be expressed by following equation (1).

$$U = (K \cdot \sigma^2)/2 \ (1)$$

On the other hand, kinetic energy W of the ball 30 can be expressed by following equation (2), where v is a velocity when the ball 30 collides with the tongue 51b, and m is a mass of the ball 30.

$$W = (m \cdot v^2)/2 \ (2)$$

When the tongue 51b is bent to maximum and the speed of the ball 30 in a direction in which the tongue 51b is bent is 0 m/s, U = W. When σ is represented by a maximum load $P_{max}$ during collision, σ = K · $P_{max}$. From the above relationship, following equation (3) holds true.

$$P_{max} = v\sqrt{(mK)} \ (3)$$

From Equation (3), it can be seen that the maximum load $P_{max}$ applied to the tongue 51b is proportional to flexural rigidity K of the tongue 51b to (1/2) power. From this result, it is understood that it is effective to reduce the rigidity of the tongue 51b to a certain extent to alleviate the ball impact force.

Here, following two methods are proposed to reduce the flexural rigidity of the tongue 51b.

First Method

The length L of the tongue 51b is 70% or more of a diameter of the ball 30.

Normally, the tongue 51b is inserted toward the thread groove 10a (depth is substantially 40% to 45% of the diameter of the ball 30) of the screw shaft 10. Accordingly, the length of the tongue 51b is slightly larger than the depth of the thread groove 10a, and is generally substantially 50% to 60% of the diameter of the ball 30 in many cases. Since the flexural rigidity decreases as the tongue 51b becomes longer, a collision force can also be reduced.

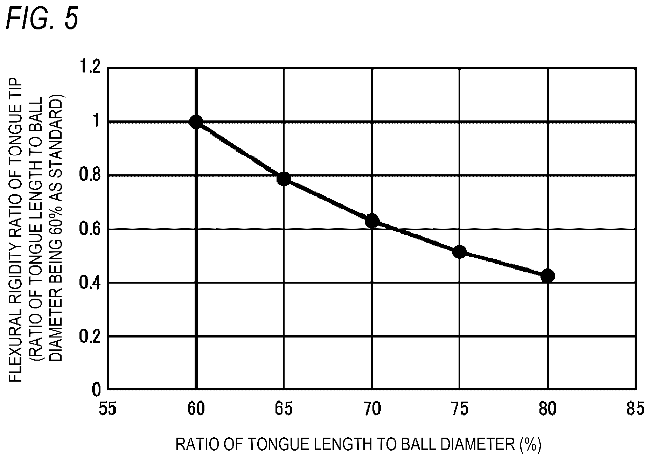

The inventors of the present invention studied how much the tongue 51b should be extended to reduce the impact force by 20%. FIG. 5 shows a calculation result showing how much the rigidity decreases when the rigidity of the tongue 51b having the length L of 60% of the diameter of the ball 30 is set at 1 and the length L is increased.

To reduce energy accumulated in the tongue 51b in the related art, which is set at 100%, by 20% to 80% due to impact, the rigidity of the tongue 51b needs to be reduced to 64%, which is a square of 80%, according to equation (1). For this purpose, according to the graph of FIG. 5, the length L of the tongue 51b is preferably set to be equal to or greater than 70% of the diameter of the ball 30, more preferably equal to or greater than 75% of the diameter of the ball 30, since the rigidity of the tongue 51b decreases by 50% or more and the accumulated energy decreases by 30%.

Second Method

A maximum thickness of the tongue 51b is set to be within 25% of the diameter of the ball 30.

By reducing the thickness of the tongue 51b, the rigidity in a bending direction can be reduced. On the other hand, when the thickness of the tongue 51b is excessively small, the strength becomes excessively low and the tongue 51b cannot withstand the impact force. Accordingly, it is desirable to reduce the thickness of the tongue 51b within a possible range, and for example, the thickness may be set at 10% or more of the diameter of the ball 30. The thickness of the tongue 51b is desirably as uniform as possible so as not to form a part having a locally increased thickness.

When the return tube 50 is made of metal, the rigidity of the tongue 51b tends to be high. Accordingly, the present embodiment can be more suitably applicable. When the return tube 50 is made of metal, the return tube 50 can be used at a high temperature, particularly 80°C or higher, as compared with a case where the return tube 50 is made of resin.

When the diameter of the ball 30 increases, the impact force also increases accordingly. The present embodiment can be more suitably applicable when the diameter of the ball 30 used in the ball screw 1 that receives a high load is 12.7 mm or more and the diameter of the screw shaft 10 is 63 mm or more.

To further increase the strength, the material of the return tube 50 is desirably SUS630 or SUS631 having relatively high durability, and the hardness of the tongue 51b is desirably HRC30 or more.

Modifications

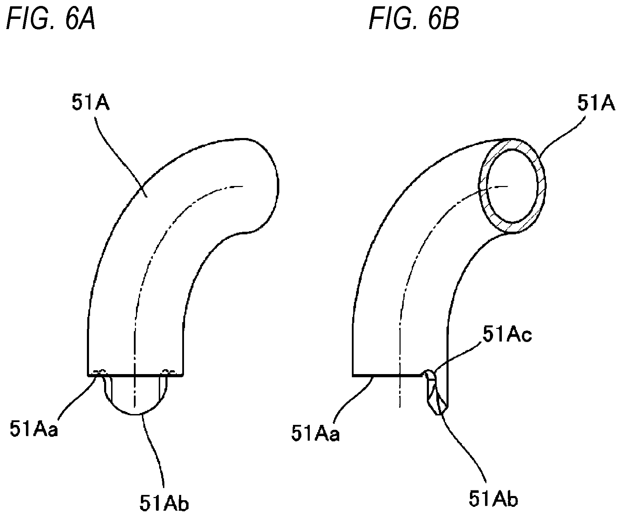

FIGS. 6A and 6B are similar to FIGS. 4A and 4B, illustrating an end portion 51A of a return tube according to a modification.

In the present modification, an arc-shaped portion 51Ac has a radius of curvature smaller than that of the first embodiment. The other configurations are the same as those of the first embodiment, and thus redundant description will be omitted.

In the first embodiment and the modification, an end portion of a return tube is integrated from a time of manufacturing, and it may be difficult to form the return tube by three-dimensionally bending a tube material. According to a following second embodiment, such a problem can be overcome.

Second Embodiment

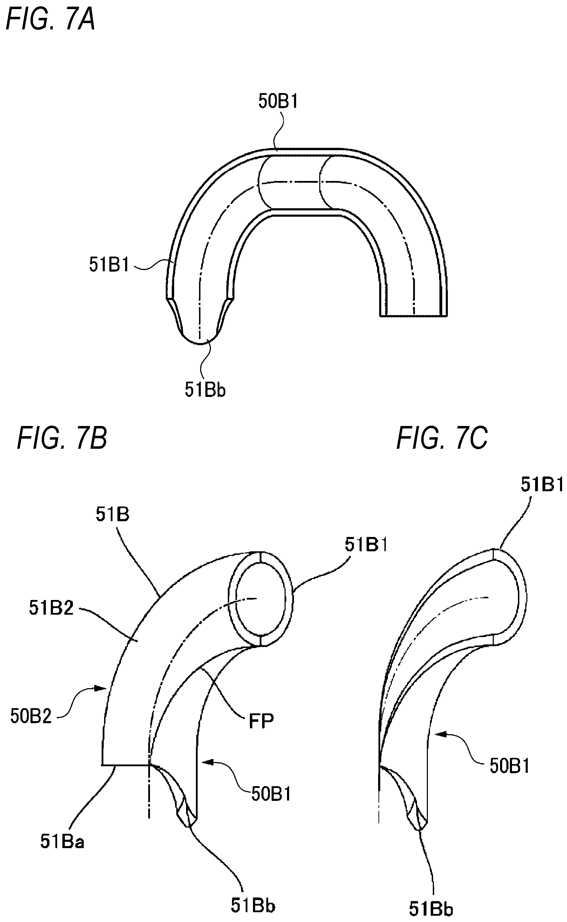

FIG. 7A illustrates a first half return tube 50B1 of a return tube cut into halves of a ball screw according to the second embodiment. FIG. 7B illustrates an end portion 51B1 of the first half return tube 50B1 in a different viewing direction. FIG. 7C illustrates an end portion 51B obtained by joining the first half return tube 50B1 and a second half return tube 50B2, which is the other half of the return tube. In the second embodiment, the return tube is cut into two halves and configurations other than the end portion 51B are the same as those of the first embodiment, and thus repeated description will be omitted.

In the second embodiment, as illustrated in FIG. 7C, a return tube is formed by joining the first half return tube 50B1 and the second half return tube 50B2, which are separately formed, on a facing plane FP. By separately forming the first half return tube 50B1 and the second half return tube 50B2 in this manner, flexural rigidity can be reduced, and an impact force due to ball collision can be further reduced. The first half return tube 50B1 and the second half return tube may also be formed by further dividing a central portion and two end sides.

In the present embodiment, since the return tube is cut into two halves, a tongue 51Bb formed at the end portion 51B1 of the first half return tube 50B1 can be accurately set at a freely selected shape, resulting in less limitation in manufacturing. Further, it is not necessary to provide an arc-shaped portion for avoiding stress concentration at a root of the tongue 51Bb. Therefore, in the second modification, as illustrated in FIG. 7(c), the root of the tongue 51Bb is joined to an end edge 51Ba of the second half return tube 50B2. The arc-shaped portion may also be formed as in the above-described embodiment. The end portion 51B may also be formed by joining three or more separately manufactured components.

First Modification

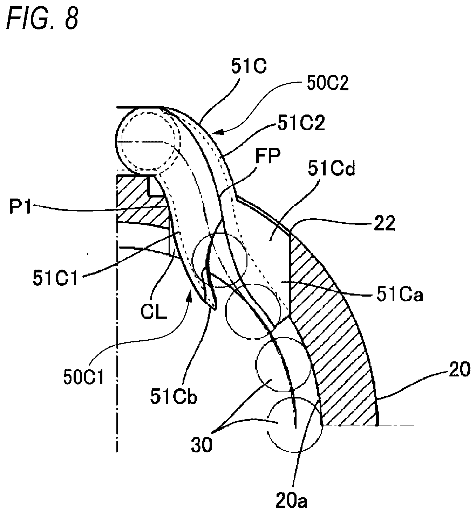

FIG. 8 is a cross-sectional view similar to FIG. 3, illustrating a ball screw including a return tube according to a first modification. Configurations other than an end portion 51C of the return tube are the same as those of the second embodiment, and thus redundant description will be omitted.

The return tube according to the present modification is also formed by joining a first half return tube 50C1 and a second half return tube 50C2 that are separately manufactured and joined to each other, and the end portion 51C includes an end portion 51C1 of the first half return tube 50C1 and an end portion 51C2 of the second half return tube 50C2. The end portion 51C1 of the first half return tube 50C1 has substantially the same shape as the end portion 51B1 of the first half return tube 50B1 illustrated in FIG. 7, and includes a tongue 51Cb. On the other hand, the end portion 51C2 of the second half return tube 50C2 has, compared with the end portion 51B2 of the second half return tube 50B2, a raised portion 51Cd formed by thickening an upper half portion 51Ca formed on a side facing the tongue 51Cb. The raised portion 51Cd has an outer surface having a shape substantially matching an inner peripheral shape of the through hole 22. Accordingly, the raised portion 51Cd comes into surface contact with the inner peripheral surface of the through hole 22 on a side facing a contact point (side close to a central portion) P1, where the end portion 51C1 of the first half return tube 50C1 comes into contact with the inner peripheral surface of the through hole 22, with a center line of the end portion 51C sandwiched in between. For this reason, a holding property of the return tube 50C is improved when the end portion 51C is disposed in the through hole 22.

Further, the end portion 51C has an outer peripheral surface (root side of the tongue 51Cb) on a side opposite to the raised portion 51Cd in contact with the through hole 22 at the contact point P1, but is not in contact with the through hole 22 on a center side of the nut 20 relative to the contact point P1. That is, a clearance CL is defined between the end portion 51C1 of the first half return tube 50C1 and the inner peripheral surface of the through hole 22 on the center side of the nut relative to the contact point P1 in a phase in a circumferential direction in which the tongue 51Cb is formed, and the clearance CL allows for flexing of the tongue 51Cb.

Second Modification

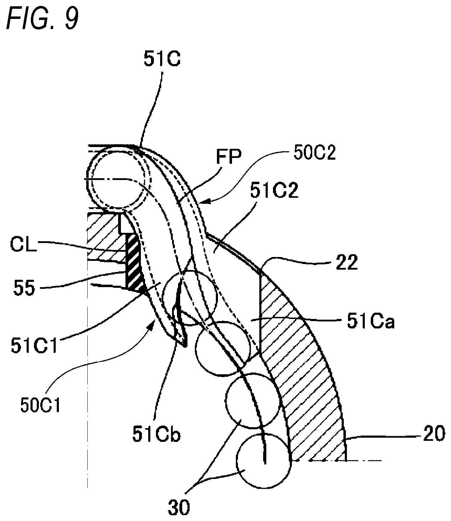

FIG. 9 is a cross-sectional view similar to FIG. 8, illustrating a ball screw according to a second modification. The present modification adopts the same return tube 50C as the first modification, and is different from the first modification in that a buffer material 55 is fixed in the clearance CL between the end portion 51C (including the root side of the tongue 51Cb) of the return tube 50C and the through hole 22 using an adhesive or the like. The other configurations are the same as those of the first modification, and thus redundant description will be omitted. The buffer material 55 may be disposed between the root of the tongue 51Cb and the inner peripheral surface of the through hole 22.

By disposing the buffer material 55 in the clearance CL, flexibility of the tongue 51Cb can be ensured, and an impact force when the ball 30 collides with the tongue 51Cb can be reduced. As a material of the buffer material 55, a soft elastic material such as rubber, resin, and a spring can be used.

The present invention is not limited to the above-described embodiments. Any component of in above-described embodiments can be modified within the scope of the present invention. In addition, any component can be added or omitted in the above-described embodiments.

Although various embodiments have been described above, it is needless to say that the present invention is not limited to these examples. It is apparent to those skilled in the art that various changes or modifications can be conceived within the scope described in the claims, and it is understood that the changes or modifications naturally fall within the technical scope of the present invention. In addition, within the scope not departing from the gist of the invention, configuration elements in the above embodiments may be combined in any manner.

The present application is based on a Japanese patent application (No. 2022-148014) filed on September 16, 2022, contents of which are incorporated herein by reference.

REFERENCE SIGNS LIST

    10 screw shaft
    20 nut
    30 ball
    31 separator
    50, 50C return tube
    51, 51A, 51B, 51C end portion
    51Ca upper half portion
    51b, 51Ab, 51Bb, 51Cb tongue
    51c, 51Ac arc-shaped portion
    52 central portion
    55 buffer material
    60 fastener

**Claims**

1.   A ball screw comprising:

        a screw shaft formed with an outer peripheral thread groove;
        a nut formed with an inner peripheral thread groove;
        a plurality of balls accommodated in a rolling path defined by the outer peripheral thread groove and the inner peripheral thread groove facing each other; and
        a return tube configured to return the balls from one end to the other end of the rolling path, wherein
        the return tube includes a tongue that protrudes toward the rolling path and scoops up the balls from the rolling path, and

the tongue has a shape that gradually narrows from a root to a tip of the tongue.

2. The ball screw according to claim 1, wherein an arc-shaped portion having a predetermined radius of curvature is formed at the root of the tongue.

3. The ball screw according to claim 1, wherein an end portion of the return tube is inserted into a through hole formed in the nut and is in contact with the through hole on two sides with a center line of the end portion sandwiched in between.

4. The ball screw according to claim 3, wherein a clearance is defined between the end portion of the return tube and an inner periphery of the through hole on a center side of the nut relative to a contact point between the end portion and the through hole in a phase in a circumferential direction in which the tongue is formed.

5. The ball screw according to claim 4, wherein a buffer material is disposed in the clearance.

6. The ball screw according to claim 1, wherein a length of the tongue is equal to or greater than 70% of a diameter of the ball, or a maximum thickness of the tongue is equal to or less than 25% of the diameter of the ball.

7. The ball screw according to any one of claims 1 to 6, wherein an end portion of the return tube is formed by joining a plurality of components manufactured separately.

FIG. 1

*FIG. 2*

*FIG. 3*

# FIG. 4A

# FIG. 4B

FIG. 5

*FIG. 6A*

51A

51Aa

51Ab

*FIG. 6B*

51A

51Ac

51Aa

51Ab

*FIG. 7A*

*FIG. 7B*

*FIG. 7C*

*FIG. 8*

*FIG. 9*

51C

FP

50C2

51C2

CL

55

51C1

50C1

22

51Ca

51Cb

20

30

## INTERNATIONAL SEARCH REPORT

| International application No. |
|---|
| **PCT/JP2023/032294** |

| A. | CLASSIFICATION OF SUBJECT MATTER |
|---|---|

*F16H 25/22*(2006.01)i
FI:   F16H25/22 D

According to International Patent Classification (IPC) or to both national classification and IPC

| B. | FIELDS SEARCHED |
|---|---|

Minimum documentation searched (classification system followed by classification symbols)

F16H25/22

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2011-122688 A (NSK LTD.) 23 June 2011 (2011-06-23) | 1, 3, 6 |
|   | claim 1, paragraphs [0007], [0013]-[0016], fig. 1-3 | |
| Y | claim 1, paragraphs [0007], [0013]-[0016], fig. 1-3 | 3, 6-7 |
| A |   | 4-5 |
| X | JP 2011-94730 A (NSK LTD.) 12 May 2011 (2011-05-12) | 1, 2 |
|   | claim 1, paragraphs [0002]-[0006], [0018]-[0023], fig. 1, 2 | |
| Y | claim 1, paragraphs [0002]-[0006], [0018]-[0023], fig. 1, 2 | 3, 6-7 |
| A |   | 4-5 |
| Y | JP 2012-112432 A (NSK LTD.) 14 June 2012 (2012-06-14) | 7 |
|   | claim 1, paragraph [0020] | |
| Y | JP 2015-224660 A (NSK LTD.) 14 December 2015 (2015-12-14) | 7 |
|   | claim 2, paragraph [0015] | |
| A | JP 2004-108454 A (NSK LTD.) 08 April 2004 (2004-04-08) | 4-5 |
|   | claims 1, 5, paragraphs [0009], [0025]-[0040], fig. 1-4d | |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 November 2023** | **21 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
|---|
| **PCT/JP2023/032294** |

| C. | DOCUMENTS CONSIDERED TO BE RELEVANT | |
|---|---|---|
| Category* | Citation of document, with indication, where appropriate, of the relevant passages | Relevant to claim No. |
| A | Microfilm of the specification and drawings annexed to the request of Japanese Utility Model Application No. 6537/1989 (Laid-open No. 98245/1990) (TSUBAKIMOTO SEIKO CO., LTD.) 06 August 1990 (1990-08-06), specification, p. 4, line 11 to p. 8, line 3, fig. 1-5 | 4-5 |

Form PCT/ISA/210 (second sheet) (January 2015)

**INTERNATIONAL SEARCH REPORT**
Information on patent family members

International application No.

**PCT/JP2023/032294**

| Patent document cited in search report | | | Publication date (day/month/year) | Patent family member(s) | Publication date (day/month/year) |
|---|---|---|---|---|---|
| JP | 2011-122688 | A | 23 June 2011 | (Family: none) | |
| JP | 2011-94730 | A | 12 May 2011 | (Family: none) | |
| JP | 2012-112432 | A | 14 June 2012 | (Family: none) | |
| JP | 2015-224660 | A | 14 December 2015 | (Family: none) | |
| JP | 2004-108454 | A | 08 April 2004 | US 2005/0016308 A1 claims 1, 7, paragraphs [0048]-[0072], fig. 1-4d | |
| JP | 2-98245 | U1 | 06 August 1990 | (Family: none) | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007285379 A
- JP 2002206617 A
- JP 2022148014 A